# EUROPEAN PATENT APPLICATION

(11) **EP 4 509 892 A1**
(43) Date of publication of application: **19.02.2025**
(21) Application number: 23192253.5
(22) Date of filing: 18.08.2023
(51) Int. Cl.: G02B 6/293, G02B 26/00, G06N 10/00

(54) **A TUNABLE NANOBEAM CAVITY RESONATOR, QUANTUM REGISTER, QUANTUM NETWORK QUANTUM COMPUTER, USE, METHOD OF ADJUSTING THE RESONANCE FREQUENCY OF A FIRST OPTICAL CAVITY, AND METHOD OF MANUFACTURING A TUNABLE NANOBEAM CAVITY**

(71) Applicant: Universität Heidelberg, 69117 Heidelberg (DE)
(72) Inventor: ULANOV, Mark, 69115 Heidelberg (DE); PERNICE, Wolfram, 69120 Heidelberg (DE); LIN, Jin, 48149 Münster (DE); GROTTKE, Thomas, 70176 Stuttgart (DE)
(74) Representative: Vossius & Partner Patentanwälte Rechtsanwälte mbB

(57) **Abstract**

The invention relates to a tunable nanobeam cavity resonator (100) comprising a first optical cavity (102) a second optical cavity (104) optically coupled to the first optical cavity (102) an electrically conductive portion (106) and an electrode (108), wherein the first optical cavity (102) and/or the second optical cavity (104) are adapted for hosting a qubit. The first optical cavity (102) and the second optical cavity (104) are provided in the tunable nanobeam cavity resonator (100) such that there is a gap (110) between the first optical cavity (102) and the second optical cavity (104). The electrically conductive portion (106) is configured to move with respect to the electrode (108) and the first optical cavity (102) when a voltage between the electrically conductive portion (106) and the electrode (108) is applied; and the electrically conductive portion (106) is mechanically connected to the second optical cavity (104) such that movement of the electrically conductive portion (106) causes movement of the second optical cavity (104) with respect to the first optical cavity (102) to adjust the gap (110) between the first optical cavity (102) and the second optical cavity (104).

## Description

The invention relates to quantum computing. In particular, the invention relates to a tunable nanobeam cavity resonator, a quantum register, a quantum network, a quantum computer, a use, a method of adjusting the resonance frequency of a first optical cavity, and a method of manufacturing a tunable nanobeam cavity.

In quantum computing, the basic unit of quantum information (qubit) may be hosted or stored in a quantum emitter with a discrete level structure. These emitters can be hosted in an optical cavity, to enhance their coherent coupling rate and guarantee indistinguishability necessary for quantum computing applications. For example, the quantum emitter may comprise a color center, e.g., in diamond, wherein the color center has different spin states. The color center interacts with the photon in the optical cavity. For the realization of such cavity resonators it may be advantageous to provide a delicate photonic system, which shows great coupling efficiency as well as low scattering losses. Especially for single photon emitters like color centers in diamond, low mode volume, ultra-high Q cavities may enhance the coupling efficiency drastically via the Purcell effect. For integrating cavity resonators including, e.g., color centers in quantum computing infrastructure, it may be advantageous to provide near unity coupling efficiency to their surrounding photonic circuitry. For example, the placement of a color center in a photonic crystal cavity enables incorporating it into a waveguide-based photonic circuitry.

Ideal coupling between the color center and the optical cavity may be achieved when the single photon emitter frequency of the color center and the resonance frequency of the cavity match perfectly. Photonic properties of cavities are sensitive to the perfection of the fabrication process, which is limited by deterministic and statistical imperfections.

It has been attempted to tune the resonance frequency of an optical cavity in a cryogenic environment by introducing gas, which freezes on the surface of the cavity, thus creating a change of the refractive environment. This shifts the center frequency of the resonance mode of the optical cavity. The frozen gas can be reduced/removed locally by microheaters. This, however, is very cumbersome and is associated with several disadvantageous side effects. For example, frozen gas attaches to the entire surface of the chip. Hence, the optical properties of the waveguides connecting the circuitry may change as well. Additionally, by using microheaters, the cryogenic environment around the microheater is heated up as well. This can lead to a raise of temperature introducing phononic noise.

An object of the present invention is to provide an alternative way of tuning the resonance frequency of the cavity to avoid at least some the above-mentioned disadvantages. In particular, it is an object to provide an effective and precise tuning mechanism and/or to provide a tuning mechanism that can target specific single tunable nanobeam cavity resonators.

These objects are solved by the subject-matter of the independent claims. Further embodiments of the invention are set out in the dependent claims, the description and the drawings.

A first aspect relates to a tunable nanobeam cavity resonator comprising a first optical cavity, a second optical cavity optically coupled to the first optical cavity, an electrically conductive portion, and an electrode. Hereby, the first optical cavity and/or the second optical cavity are adapted for hosting a qubit. Furthermore, the first optical cavity and the second optical cavity are provided in the tunable nanobeam cavity resonator such that there is a gap between the first optical cavity and the second optical cavity. The electrically conductive portion is configured to move with respect to the electrode and the first optical cavity when a voltage between the electrically conductive portion and the electrode is applied. Moreover, the electrically conductive portion is mechanically connected to the second optical cavity such that movement of the electrically conductive portion causes movement of the second optical cavity with respect to the first optical cavity to adjust the gap between the first optical cavity and the second optical cavity.

In other words, the first optical cavity and the second optical cavity form optically coupled optical cavities. The resonance frequency of these coupled optical cavities, i.e., the first and second optical cavity, is shifted compared to a corresponding single optical cavity. The tuning mechanism comprises a mechanism to adjust the gap between the first optical cavity and the second optical cavity. When the gap increases, the resonance frequency of the first and second optical cavity shifts towards the case of a single uncoupled optical cavities. Thus, in other words, the tunable nanobeam cavity resonator provides an active mechanism for tuning the resonance frequency of the optical cavity.

To adjust the gap between the first and second optical cavity, electromechanical deformation is utilized. That is, the electrically conductive portion is electromechanically deformed when a voltage between the electrically conductive portion and the electrode is applied. Since the electrically conductive portion is mechanically connected to the second optical cavity, also the second optical cavity is deformed such that the gap between the first and second optical cavities is changed.

By changing the gap between the first optical cavity and the second optical cavity, the resonance frequency of the first optical cavity and/or the second optical cavity is adjusted. The adjustment of the resonance frequency of the first and/or second optical cavity allows for easy calibration of respective optical cavity, e.g., with respect to the resonance of the color center of the respective optical cavity. In this way, e.g., an on-demand shift of the resonance frequency without the need for gases contaminating the inside of a cryostat is achieved.

In this way, the resonance frequency of a specific single optical cavity can be tuned without affecting the resonance frequency of other optical cavities.

The first and second optical cavities may also be referred to as resonating cavities or optical resonators. An optical cavity is a photonic structure resembling a resonator. An optical cavity is an arrangement of mirrors or other optical elements that forms a cavity resonator for light waves. For example, the first optical cavity is incorporated in a first waveguide and the second optical cavity is incorporated in a second waveguide. In other words, the first and second waveguides may have optical elements to form the first and second optical cavities, respectively.

The waveguides and optical cavities can be made from high refractive index materials. A higher difference (i.e. contrast) between the waveguide's and/or optical cavities' refractive index and the surrounding air leads to enhanced mode guiding and focussing of optical intensity. Suitable materials are monocrystalline diamond, silicon carbide, lithium niobate and silicon nitride.

The first and second optical cavities and/or the first and second waveguides preferably are elongate structures. The term "end" of the optical cavity/waveguide refers to end surfaces of the respective optical cavity/waveguide with respect to the longitudinal direction. The term "side" refers to side surfaces of the cavity/waveguide that are parallel to the longitudinal direction and are located between the two ends of the optical cavity/waveguide. The terms "top surface" and "bottom surface" may refer to surfaces of the optical cavity/waveguide that are parallel to the longitudinal direction, are located between the two ends of the optical cavity/waveguide, and are essentially parallel to a plane in which the first optical cavity, the second optical cavity and the electrically conductive portion are located. The "bottom" may refer to the surface that faces towards a base substrate of the tunable nanobeam cavity resonator and the "top surface" may refer to the surface that is opposite the base surface. The term "lateral direction" may refer to a direction in the plane containing the first and second optical cavities and perpendicular to the first and second optical cavities. The term "vertical direction" may refer to a direction perpendicular to the plane containing the first and second optical cavities.

The optical cavity's geometry gives rise to quantized field quanta. Matching the optical cavity's and the quantum emitter's, preferably the color center's, frequency gives rise to a coherent coupling regime between the quantum emitter and the cavity (Jaynes-Cunnings-model). Since a single photon quantum emitter on bare substrate or on an integrated waveguide may feature a coupling efficiency that is insufficient for quantum information applications, efficient coherent coupling to/from the quantum emitter may be realized via the "Purcell effect", which, on the optical cavity side of things, relies on an overlap of the resonance frequency of the optical cavity and the quantum emitter's frequency, the quality factor of the optical cavity's resonance and the modal volume of the optical cavity resonance.

In general, the spatial electromagnetic field distribution of an optical cavity decays rapidly outside the high refractive index material. The proximity of two optical cavities leads to an overlap of their respective electromagnetic fields. This can lead to optical damping or enhancing of the resonators' oscillations, i.e., an optical coupling of the two optical cavities. Quantum mechanically, new optical eigenfrequencies emerge, taking into account the overlapping field distributions of both resonators. These eigenfrequencies feature different spatial electromagnetic field/energy distributions due to the gap region, which manifests in a shift in frequency compared to an isolated cavity eigenfrequency.

The first and/or second optical cavity are configured to host or store a qubit. Preferably, the qubit comprises a quantum emitter configured to host or store a qubit. For example, the quantum emitter may be or comprise a color center. A color center in diamond is usually comprised of one or more vacant position(s) in the crystal lattice of diamond. Additionally, adjacent to the vacant position an impurity atom can be found (Nitrogen, Silicon, Germanium, ...). This local system of an impurity combined with the vacancy/vacancies leads to a local discrete level system within the band gap of the diamond lattice (see schematic examples figure of NV-center attached). The surrounding diamond lattice is mostly consisting of the most abundant isotope of carbon 12C, which is nuclear spin free. The spin free lattice provides a suitable environment for quantum bit engineering due to the resulting long coherence times of spin states. The spin states associated with the color centers function as quantum bits and can be read out optically. Manipulation of the spin states can be realized optically and/or with additional microwave antennas (depending on the color center).

The concept of color centers is, e.g., described in:
- Gordon, L.; Weber, J.R.; Varley, J.B. et al. Quantum computing with defects. MRS Bulletin 38, 802-807 (2013). https://doi.org/10.1557/mrs.2013.206;
- Maximilian Ruf, Noel H. Wan, Hyeongrak Choi, Dirk Englund, Ronald Hanson; Quantum networks based on color centers in diamond. Journal of Applied Physics 21 August 2021; 130 (7): 070901. https://doi.org/10.1063/5.0056534;
- Gerg 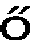 Thiering and Adam Gali Ab Initio Magneto-Optical Spectrum of Group-IV Vacancy Color Centers in Diamond. Phys. Rev. X 8, 021063 - Published 11 June 2018; Erratum Phys. Rev. X 10, 039901 (2020).
   https://doi.org/10.1103/PhysRevX.8.021063; and
- Erika Janitz, Mihir K. Bhaskar, and Lilian Childress, "Cavity quantum electrodynamics with color centers in diamond," Optica 7, 1232-1252 (2020).

Thus, the expression "qubit" may refer to a discrete energetic (two-) level system. Due to the nature of quantum mechanics this system can feature superpositions of both states which differentiates it from classical bits. Additionally, quantum phenomena as quantum entanglement and thus quantum teleportation can be utilized in complex quantum computing schemes.

Such a qubit may be hosted in a quantum emitter, e.g., a color center. The color center provides the discrete level structure and the spin memory states within a suitable environment. However high-fidelity optical readout (in some cases manipulation) of the color center's states requires coherent coupling to the color center's zero-phonon-line (ZPL).

The first optical cavity and the second optical cavity are arranged in such a way that there is a gap between the first optical cavity and the second optical cavity. In other words, the first optical cavity and the second optical cavity may be spaced apart from each other. The gap may also be referred to as the distance between the first optical cavity and the second optical cavity. The second optical cavity and/or second waveguide and the electrically conductive portion may be structured in such a way that they are movable with respect to the first optical cavity and/or a base surface and/or a base substrate. The position of the electrode may be fixed with respect to the first optical cavity and/or a base surface and/or base substrate.

The electrically conductive portion may refer to a structure of the tunable nanobeam cavity resonator comprising an electrically conductive material, e.g., a layer of electrically conductive material. The electrically conductive portion may be located next to or besides the second optical cavity. For example, the electrically conductive portion is a third waveguide. For example, the top surface of the third waveguide may be covered by a film of electrically conductive material.

The electrically conductive material may, e.g., comprise, preferably consist of, Gold, titanium, chromium, silver, and/or copper.

One side of the electrically conductive portion and/or third waveguide may face and be mechanically connected to the second optical cavity and/or the second waveguide. The other side of the electrically conductive portion and/or third waveguide may face the electrode. By applying a voltage between the electrode and the electrically conductive portion, an electromagnetic force is applied to the electrically conductive portion, which causes a deformation of the electrically conductive portion and the second optical cavity mechanically connected to the electrically conductive portion. Preferably, the deformation is an in-plane deformation with respect to a plane in which the first optical cavity, the second optical cavity and the electrically conductive portion are arranged.

The applied voltage may, e.g., be in the range of 0 V to 500 V.

The feature that the electrically conductive portion is mechanically connected to the second optical cavity may be understood as that the tunable nanobeam cavity resonator comprises a mechanical structure that interconnects the electrically conductive portion second optical cavity. For example, the mechanical structure is a rod-like structure that is perpendicular to the electrically conductive portion and/or the second optical cavity, which may also be denoted as "arm". These mechanical structures may be perpendicular to the second optical cavity and/or the electrically conductive portion. The mechanical connection of the second optical cavity and the electrically conductive portion may enable that movement of the electrically conductive portion is transmitted to the second optical cavity due to their mechanical connection.

Processes for manufacturing structures suited to be used in a tunable nanobeam cavity as disclosed herein are, e.g., disclosed in:
- Mouradian, S.; Wan, N. H.; Schröder, T.; Englund, D. Rectangular photonic crystal nanobeam cavities in bulk diamond. Appl. Phys. Lett. 111, 021103 (2017). https://doi.org/10.1063/1.4992118;
- Dory, C.; Vercruysse, D.; Yang, K.Y. et al. Inverse-designed diamond photonics. Nat Commun 10, 3309 (2019). https://doi.org/10.1038/s41467-019-11343-1;
- Chia, C.; Machielse, B.; Shams-Ansari, A.; Lončar, M. Development of hard masks for reactive ion beam angled etching of diamond. Opt. Express 30, 14189-14201 (2022). https://doi.org/10.1364/OE.452826;
- Latawiec,P.; Burek, M. J.; Sohn, Y.; Lončar, M. Faraday cage angled-etching of nanostructures in bulk dielectrics. Journal of Vacuum Science & Technology B 34, 041801 (2016). https://doi.org/10.1116/1.4944854.

Preferably, the adjustment of the gap is suited to adjust a resonance frequency of the first optical cavity and/or the second optical cavity.

In this way, the resonance frequency can be tuned by adjusting the size of the gap.

Preferably, the first optical cavity is configured to host or store a qubit. Preferably, the first optical cavity comprises and/or bears a quantum emitter, more preferably a color center. Preferably, the second optical cavity is provided to tune the resonance frequency of the first optical cavity.

Preferably, the first optical cavity may comprise a first elongate structure and the second optical cavity may comprise a second elongate structure.

For example, the first elongate structure may be a first waveguide and the second elongate structure may be a second waveguide. In other words, the first optical cavity may be formed in the first waveguide and the second optical cavity may be formed in the second waveguide.

Preferably, the first optical cavity and the second optical cavity are arranged parallel to each other.

This arrangement allows for effective and controllable tuning of the resonance frequency of the first and/or second optical cavity.

Preferably, the electrically conductive portion is parallel to the second optical cavity.

This allows to transmit a movement to the second optical cavity such that the second optical cavity remains parallel to the first optical cavity.

Preferably, the first optical cavity and the second optical cavity each comprises a plurality of apertures forming at least one Bragg mirror.

The at least one Bragg mirror is/are configured to reflect lightwaves and thus form the optical cavity. Preferably, the plurality of apertures form two Bragg mirrors on opposite ends of the respective optical cavity.

In other words, the first waveguide may comprise a plurality of apertures forming at least one Bragg mirror. In this way, the first optical cavity is formed in the first waveguide. Likewise, the second waveguide may comprise a plurality of apertures forming a Bragg mirror. In this way, the second optical cavity is formed in the second waveguide

The apertures may have a diameter in the range of 10 nm to 1 µm. The first/second optical cavity preferably have between 10 and 100 apertures.

Preferably, the first optical cavity is a one-dimensional optical cavity. In other words, the first optical cavity may be a linear cavity.

Preferably, the second optical cavity is a one-dimensional optical cavity. In other words, the second optical cavity may be a linear cavity.

Preferably, the first optical cavity is incorporated into a first free-standing wave guide. Preferably, the second optical cavity is incorporated into a second free-standing wave guide.

The expression "free-standing" specifies that the waveguide has at least a portion that is not mechanically connected to a base surface of the tunable nanobeam cavity resonator. In other words, the free-standing portion of the waveguide has a bottom surface that is space apart from the base surface of the tunable nanobeam cavity resonator.

In other words, the first optical cavity is incorporated in a free-standing portion of the first waveguide. In other words, the second optical cavity is incorporated in a free-standing portion of the second waveguide.

In this way, the free-standing portion of the first/second waveguide can move with respect to the base surface of the tunable nanobeam cavity resonator and any structure that has a fixed position relative to the base surface of the tunable nanobeam cavity resonator. For example, when a voltage is applied between the electrode and the electrically conductive portion, the electrically conductive portion moves with respect to the base surface of the tunable nanobeam cavity resonator in a transversal direction. Since the second optical cavity is mechanically connected to the electrically conductive portion, the second optical cavity also moves with respect to the base surface in a transversal direction. The first optical cavity, in turn, may not be mechanically connected to the electrically conductive portion. As such, the first optical cavity stays fixed with respect to the base surface, such that the second optical cavity is moved with respect to the first optical cavity, which adjusts the gap between the first and second optical cavities.

For example, the first and second optical cavities may be incorporated into straight, free-standing waveguides.

The tunable nanobeam cavity resonator may comprise two support structures at both ends of the first free-standing wave guide, wherein said two support structures mechanically connect the first free-standing wave guide to a base surface or substrate of the tunable nanobeam cavity resonator. Likewise, the tunable nanobeam cavity resonator may comprise two support structures at both ends of the second free-standing wave guide, wherein said two support structures mechanically connect the second free-standing wave guide to the base surface or substrate.

Preferably, the tunable nanobeam further comprises a free-standing support structure for the electrically conductive portion, the electrically conductive portion being provided on the free-standing support structure. Furthermore, the free-standing support structure is connected to the second wave guide by at least one connector arm.

In other words, the free-standing support structure may be the structure supporting the electrically conductive material of the electrically conductive portion. The free-standing support structure may move together with the electrically conductive portion when a voltage is applied between the electrically conductive portion and the electrode.

The connector arm may refer to a mechanical structure that interconnects the electrically conductive portion and the second optical cavity. For example, the connector arm may be a rod-like structure that is perpendicular to the longitudinal direction of the second optical cavity and/or the electrically conductive portion.

In other words, the free-standing support structure may be a third wave guide.

Preferably, two support structures mechanically connect the free-standing support structure to the substrate.

Preferably, the free-standing support structure and the first wave guide are located on different sides of the second wave guide.

Preferably, the electrically conductive portion comprises, preferably is formed by, a film of electrically conductive material provided on the free-standing support structure.

The film may, e.g., have a thickness in the range of 20 nm to 800 nm. The electrically conductive material may comprise, preferably consist of, gold, titanium, chromium, silver, and/or copper.

Preferably, the free-standing support structure is connected to the second wave guide by at least two connector arms. At least one of the connector arms is connected to the second wave guide proximate to a first end of the second optical cavity. At least one of the connector arms is connected to the second wave guide proximate to a second end of the second optical cavity, the first end and the second end being opposite ends of the optical cavity.

Preferably, the at least one connector arms, preferably each one of the at least one connector arms, is perpendicular to the second optical cavity and/or the electrically conductive portion. Each connector arm may also be free-standing. That is, the connector arms are not directly mechanically connected or attached to the base surface and/or base substrate.

Because of the structural support provided by the connector arms, the second optical cavity remains effectively parallel to the first optical cavity while electromechanically displaced.

Preferably, the first and second connector arms are located outside of the second optical cavity. In other words, the first and second connector arms are not located between the first and second end of the second optical cavity. In this way, scattering losses may be reduced. Moreover, the structural stability of the second optical cavity when deformed may be improved.

Preferably, the tunable nanobeam cavity resonator further comprises an incoupling wave guide configured to couple light into the first cavity.

Preferably, the incoupling wave guide may be located on a side of the first optical cavity that is opposite to the side on which the second optical cavity is located. The incoupling waveguide may only be supported on one end. The other end may be configured to couple with an optical fibre.

Preferably, the incoupling wave guide comprises a tapered end configured to couple with a tapered fiber.

More specifically, the other end of the waveguide may be tapered to allow for in- and outcoupling to a tapered fibre. Through the tapered waveguide interface, guided light from a tapered single-mode optical fibre can be coupled into the first optical cavity by means of adiabatic mode transfer. In this way, back reflections may be avoided and nearly all light may be coupled into the first optical cavity.

Preferably, the incoupling wave guide comprises a plurality of apertures forming a Bragg mirror. Preferably, the apertures in the incoupling wave guide are arranged such that a mirror plane of the Bragg mirror formed by the apertures of the incoupling wave guide is located at the same longitudinal position as the center of the first optical cavity and/or the second optical cavity.

In this way, an evanescent field is enhanced at the Bragg mirror plane of the incoupling wave guide, which guarantees coupling of the reflected light to the first optical cavity.

Preferably, the first optical cavity and/or first waveguide and the second optical cavity and/or second waveguide are formed by etching structures from a substrate. Furthermore, both ends of the first optical cavity and/or the first waveguide are attached to a respective support structure of the first optical cavity and both ends of the second optical cavity and/or the second waveguide are attached to a respective support structure of the second optical cavity.

The substrate described herein preferably comprises, more preferably consists of, diamond, Si3N4, SOI, and/or LiNbO3.

Preferably, the electrically conductive portion and/or the free-standing support structure is formed by etching a structure from a substrate, wherein both ends of the electrically conductive portion and/or the free-standing support structure are attached to a respective support structure of the free-standing support structure.

Preferably, the at least one/two connector arm/arms is/are formed by etching a structure/structures from a substrate.

Preferably, the tunable nanobeam cavity resonator further comprises a base substrate. The support structures of the first optical cavity and the support structures of the second optical cavity are provided on the base substrate, preferably by etching. Furthermore, the first optical cavity and the second optical cavity are spaced apart from the base substrate.

The base substrate may be formed from the same bulk of material as the first and second optical cavities. Alternatively, the base substrate and the first and second optical cavities may be formed in different layers of a layered material.

More specifically, the first optical cavity and the second optical cavity may be spaced apart from the base substrate in the vertical direction. In the context of the present disclosure, the term "vertical direction" refers to a direction perpendicular to the substantially planar surface of the base substrate and/or a plane containing the first optical cavity and the second optical cavity.

Preferably, the tunable nanobeam cavity resonator further comprises a base substrate and a layer on the base substrate, wherein the first optical cavity, the second optical cavity are provided in the layer provided on the base substrate, preferably by etching.

In other words, the first waveguide, the second waveguide and also the free-standing support structure may be provided in the layer.

For example, the base substrate comprises, preferably consists of, silicone and the layer comprises, preferably consists of, diamond. Furthermore, an additional layer comprising, preferably consisting of, silicone oxide may be located between the base substrate and the layer, in which the first optical cavity and the second optical cavity are provided.

Preferably, the gap has a width between 5 nm and 5 µm, preferably between 10 nm and 1 µm, more preferably between 20 nm and 500 nm.

These gap sizes have been found to be optimal to provide an optical coupling between the first optical cavity and the second optical cavity.

Preferably, the first optical cavity and/or the second optical cavity comprises, preferably is formed of, diamond, Si3N4, SOI, and/or LiNbO3.

These materials feature a high refractive index, which may improve light confinement. Preferably, the first optical cavity and/or the second optical cavity has a length between 5 µm and 1 mm, preferably between 20 µm and 500 µm, more preferably between 50 µm and 100 µm.

Preferably, the first wave guide and/or the second wave guide has a length between 5 µm and 1 mm, preferably between 20 µm and 500 µm, more preferably between 50 µm and 100 µm.

It has been found that, which such a length, the second wave guide can be deformed in such a way that the second cavity remains essentially linear and parallel to the first optical cavity.

Preferably, the first optical cavity and/or the second optical cavity has a thickness 10 nm and 2 µm, preferably between 50 nm and 1 µm, more preferably between 100 nm and 800 nm.

Preferably the dimensions of the waveguide/cavity are close to the target wavelength. This way the waveguide remains single- propagation mode. Higher order modes are suppressed. If the waveguide's cross section is too large, the waveguide becomes multimode; if the waveguide's cross section is too small, the waveguide is not capable of supporting the targeted mode. As such, the above-mentioned thickness has been found to be suitable.

Preferably, the first optical cavity and/or the second optical cavity has a triangular, rectangular, rhomboid or trapezoidal cross-sectional shape.

In this regard, the shape may refer to the shape of the cross-section of the first/second optical cavity perpendicular to a longitudinal direction of the first/second optical cavity.

Preferably, each of the at least one connector arms has a length between 10 nm and 100 µm, preferably between 50 nm and 10 µm, more preferably between 100 nm and 5 µm.

Preferably, the length of the connector arm has to be smaller than the cavity length for mechanical stability. As such, the above-mentioned length has been found to be suitable.

Preferably, the tunable nanobeam cavity resonator further comprises means to apply the voltage between the electrically conductive portion and the electrode.

It is noted that the definitions, explanations, effect and advantages provided with regard to the tunable nanobeam cavity also apply to the corresponding features of the other aspects.

A further aspect relates to a quantum register comprising at least two tunable nanobeam cavity resonators, each one of the at least two tunable nanobeam cavity resonators as disclosed herein.

In quantum computing, a quantum register is a system comprising multiple qubits. It is the quantum analogue of the classical processor register.

A further aspect relates to a quantum network comprising a plurality of nodes, wherein each of the plurality of nodes comprises at least one tunable nanobeam cavity resonator as disclosed herein.

A further aspect relates to a quantum computer comprising a tunable nanobeam cavity resonator as disclosed herein or a quantum register as disclosed herein.

A further aspect relates to the use of a tunable nanobeam cavity resonator as disclosed herein or a quantum register as disclosed herein, a quantum network as disclosed herein, or a quantum computer as disclosed herein.

A further aspect relates to a method of adjusting the resonance frequency of a first optical cavity and/or a second optical cavity of a tunable nanobeam cavity as disclosed herein. The method comprises the step of applying a voltage between the electrically conductive portion and the electrode.

A further aspect relates to a method of manufacturing a tunable nanobeam cavity, preferably, a tunable nanobeam cavity as disclosed herein. The method comprises the steps of providing a first optical cavity, providing a second optical cavity optically coupled to the first optical cavity such that there is a gap between the first optical cavity and the second optical cavity, providing an electrically conductive portion, and providing an electrode. The first optical cavity and/or the second optical cavity adapted for hosting a qubit. Furthermore, the electrically conductive portion is provided such that it is configured to move with respect to the electrode and the first optical cavity when a voltage between the electrically conductive portion and the electrode is applied. Moreover, the electrically conductive portion is mechanically connected to the second optical cavity such that movement of the electrically conductive portion causes movement of the second optical cavity with respect to the first optical cavity to adjust the gap between the first optical cavity and the second optical cavity.

Preferably, the method further comprises providing a bulk substrate. Providing the first optical cavity comprises etching a first free-standing structure from the bulk substrate, wherein both ends of the first free-standing structure are attached to a support structure. Providing the second optical cavity comprises etching a second free-standing structure from the bulk substrate, wherein both ends of the second free-standing structure are attached to the support structure. Providing the electrically conductive portion comprises etching a third free-standing structure from the bulk substrate, wherein both ends of the third free-standing structure are attached to the support structure.

For example, the method may comprise any one or any combination of the following techniques:
- Depositing a hard mask on the bulk substrate. The hard mask may be deposited by physical vapor deposition, sputtering and/or atomic layer deposition.
- Depositing an electron beam negative resist on the hard mask, e.g., by spin-coating.
- Patterning the electron beam negative resist by exposing portions of the electron beam negative resist to an electron beam.
- Removing unexposed resist in a development step, e.g., chemically and/or by dry-etching.
- Transferring the pattern to the hard mask, e.g., by dry etching.
- Transferring the pattern to the substrate, e.g., by dry etching.
- Creating free-standing structures by angular etching.
- Removing the mask, e.g., chemically.

This is, e.g., described in
• Chia, C.; Machielse, B.; Shams-Ansari, A.; and Lončar, M. Development of hard masks for reactive ion beam angled etching of diamond. Opt. Express 30, 14189-14201 (2022). https://doi.org/10.1364/OE.452826;
• Latawiec, P.; Burek, M. J.; Sohn, Y.-I.; Lončar, M. Faraday cage angled-etching of nanostructures in bulk dielectrics. Journal of Vacuum Science & Technology B 34, 041801 (2016). https://doi.org/10.1116/1.4944854.

Preferably, the method comprises providing a base substrate, providing a layer on the base substrate. Providing the first optical cavity comprises etching a first free-standing structure from the layer, wherein both ends of the first free-standing structure are attached to a support structure. Providing the second optical cavity comprises etching a second free-standing structure from the layer, wherein both ends of the second free-standing structure are attached to the support structure. Providing the electrically conductive portion comprises etching a third free-standing structure from the layer, wherein both ends of the third free-standing structure are attached to the support structure.

For example, the method may comprise any one or any combination of the following techniques:
- Providing a layered material comprising a material substrate (e.g., a Silicone base substrate), a buffer layer (e.g., an SiO₂ layer), and a photonics layer (e.g., a diamond layer).
- Depositing a negative tone resist (e.g. a Hydrogen silsesquioxane (HSQ) resist) on the photonics layer.
- Patterning the negative tone resist by exposing portions of the negative toneresist to an electron beam.
- Transferring the pattern to the photonics layer, e.g., via reactive ion etching, thereby partly removing the diamond layer.
- Depositing a hard mask layer (e.g., a Cr, Ti, Ni, Nb and/or Al layer).
- Depositing a positive tone resist (e.g., a Polymethylmethacrylat (PMMA) layer), e.g., by spin coating.
- Patterning the area where the free-standing structures are to be created, e.g., with an electron beam.
- Transferring the pattern to the hard mask layer via etching.
- Removing the remaining photonics layer, wherein the hard mask layer acts as a hard mask.
- Removing the hard mask layer layer and the negative tone resist.
- Partially removing the buffer layer within an opening window, e.g., via wet etching.

This is, e.g, described in: Rath, Patrik integrated optomechanics and single-photon detection in diamond photonic integrated circuits. Karlsruher Institut für Technologie (KIT). DOI: 10.5445/IR/1000064004.

Preferably, providing the electrically conductive portion comprises providing an electrically conductive layer on the third free-standing structure.

Preferably, providing the electrode comprises providing an electrically conductive layer on a portion of the substrate.

Providing an electrically conductive layer may comprise the steps of providing a positive resist, e.g., by spin coating; patterning the positive tone resist, e.g., by electron beam exposure; removing the pattern or exposed resist in a development step, e.g., chemically or by dry-etching; deposition of a metal layer; and removing the resist, e.g., with a lift-off chemical.

Preferably, the second free-standing structure and the third free-standing structure are etched from the substrate such that the second free-standing structure and the third free-standing structure are mechanically connected by at least two connector arms.

Preferred embodiments of the present invention are further elucidated below with reference to the drawings.
Fig. 1 shows a top view of the tunable nanobeam cavity resonator according to a preferred embodiment.
Fig. 1A shows a cross section of the cut A-A through the tunable nanobeam cavity resonator of Fig. 1.
Fig. 1B shows a cross section of the cut B-B through the tunable nanobeam cavity resonator of Fig. 1.
Fig. 2 show the deformation of the electrically conductive portion and the second optical cavity when a voltage is applied between the electrically conductive portion and the electrode.
Figs. 3A - 3G show a method of manufacturing free-standing structures that may be employed for manufacturing in a tunable nanobeam cavity resonator according to a preferred embodiment.
Figs. 4A-4B show a method of manufacturing free-standing structures that may be employed for manufacturing a tunable nanobeam cavity resonator according to a preferred embodiment.
Figs. 5A-5E show a method of depositing a layer of electrically conductive material that may be employed for manufacturing a tunable nanobeam cavity resonator according to a preferred embodiment.
Fig. 6 shows a quantum register according to a preferred embodiment.
Fig. 7 shows a quantum network according to a preferred embodiment.
Fig. 8 shows a quantum computer according to a preferred embodiment.

### DETAILED DESCRIPTION OF THE DRAWINGS

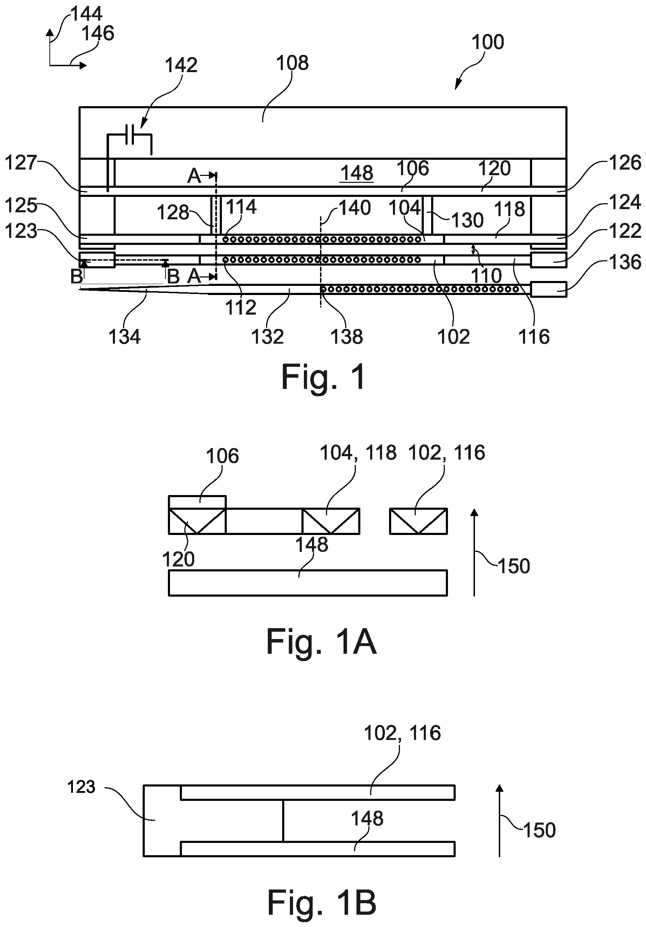

Fig. 1 shows a top view of a tunable nanobeam cavity resonator 100 according to a preferred embodiment. The tunable nanobeam cavity resonator comprises a first optical cavity 102, a second optical cavity 104, an electrically conductive portion 106 and an electrode 108, which are all arranged in different lateral positions (in this regard, reference numeral 144 refers to the lateral direction and reference numeral 146 refers to the longitudinal direction, the vertical direction is perpendicular to the image plane).

The first optical cavity 102 and/or the second optical cavity 104 are configured to host a qubit. For example, the first optical cavity 102 and/or the second optical cavity may comprise a quantum emitter such as a color center configured to host the qubit. For example, the color center is located at or close to the (longitudinal) center of the longitudinal cavity. However, in some embodiments it may be possible to place the color center off-center.

More specifically, the first optical cavity 102 is formed in a first free-standing waveguide 116. Likewise, the second optical cavity 104 is formed in a second free-standing waveguide 118, and the electrically conductive portion 106 is formed in a free-standing support structure 120. The free-standing support structure 120 may be a third free-standing waveguide. In particular, the portions of the first optical cavity 102 and the second optical cavity 104 are formed in the respective free-standing portion of the first and second free-standing waveguides 116 and 118, respectively. The term "free-standing" means that the respective portion of the waveguides 116, 118 and 120 is not mechanically connected to the underlying base surface and/or base substrate 148 and is spaced apart vertically from the base surface and/or base substrate 148.

The first optical cavity 102 and/or first free-standing waveguide 116, the second optical cavity 104 and/or second free-standing waveguide 118, the electrically conductive portion 106 and/or free-standing support structure 120 and the electrode 108 are all parallel to each other and are located essentially in a plane that is parallel to the base surface and/or base substrate 148 and are spaced apart from each other in the lateral direction 144. The term "essentially" means that these structures do not need to be exactly in the same plane. For example, the electrically conductive portion 108 and the electrode 108 may comprise a layer of electrically conductive material that is deposited on the free-standing support structure 120 and a support structure of the electrode 108. As such, these layers of electrically conductive material may be slightly more elevated in the vertical direction compared to the first and second optical cavities 102 and 104.

The first waveguide 116 is mechanically connected and/or attached to the base surface and/or base substrate 148 by two support structures 122 and 123 located on both ends of the first waveguide 116. Likewise, the second waveguide 118 is mechanically connected and/or attached to the base surface and/or base substrate 148 by two support structures 124 and 125 located on both ends of the second waveguide 118. Likewise, the free-standing support structure 120 is mechanically connected and/or attached to the base surface and/or base substrate 148 by two support structures 126 and 127 located on both ends of the second waveguide 118.

In particular, the first optical cavity 102 and the second optical cavity 104 are arranged in such a way that a gap 110 between the first optical cavity 102 and the second optical cavity 104 is formed. The gap 110 may refer to a distance between the first optical cavity 102 and the second optical cavity 104 and/or a distance between the first waveguide 116 and the second waveguide 118 in the lateral direction 144.

The first optical cavity 102 and/or first waveguide 116 comprises a plurality of apertures 112 that form Bragg mirrors. Likewise, the second optical cavity 104 and/or second waveguide 118 comprises a plurality of apertures 114 that form Bragg mirrors. In other words, these Bragg mirrors form the first and second optical cavities 102, 104, respectively.

The electrically conductive portion 106 and/or the free-standing support structure 120 is mechanically connected to the second optical cavity and/or the second waveguide 118 by preferably two connector arms 128, 130. These connector arms 128, 130 are located proximate to respective ends of the second optical cavity 104. In particular, the connector arms 128, 130 are arranged such that they are attached to the second waveguide 118 outside of the second optical cavity 104.

Furthermore, the tunable nanobeam cavity resonator 100 comprises an incoupling waveguide 132 that is arranged next to and parallel to the first optical cavity 102. The incoupling waveguide 132 is also located in the same plane as the first optical cavity 102 and the second optical cavity 104. The incoupling waveguide 132 is formed by a free-standing waveguide that is mechanically connected and/or attached to the base surface and/or base substrate 148 by a respective support structure 136 located on one end of the incoupling waveguide 132. The other end of the incoupling waveguide 132 is not attached to the base surface and/or base substrate 148 but comprises a tapered end 134 configured to couple with a tapered fiber. The incoupling waveguide 132 comprises a plurality of apertures 138 forming a Bragg mirror. The apertures 138 are arranged so that a mirror plane 140 of the Bragg mirror of the incoupling waveguide 132 is located at the same longitudinal position as the center of the first optical cavity 102 and/or the second optical cavity 104.

The tunable nanobeam cavity resonator 100 further comprises means 142 to apply a voltage between the electrode 108 and the electrically conductive portion 106.

By applying a voltage between the electrode 108 and the electrically conductive portion 106, an electromechanics force is applied to the electrically conductive portion 106 and/or the free-standing support structure 120 so that the electrically conductive portion 106 moves towards or away from the electrode 108. Since the second optical cavity 104 and/or the second waveguide 118 is mechanically connected to the electrically conductive portion 106 and/or the free-standing support structure 120, the second optical cavity 104 and/or the second waveguide 118 move together with the electrically conductive portion 106 and/or the free-standing support structure 120. In this way, the size of the gap 110 between the first optical cavity 102 and the second optical cavity 104 is adjusted. By adjusting the size of the gap 110, the resonance frequency of the first optical cavity 102 and/or the second optical cavity 104 can be tuned. For example, the resonance frequency of the first optical cavity 102 can be tuned such that it corresponds to the emission frequency of the color center.

Fig. 1A shows a cross-section of a portion of the tunable nanobeam cavity resonator 100 along the cut A-A of Fig. 1. As can be seen, the free-standing support structure 120, the second optical cavity 104 and/or second waveguide, and the first optical cavity 102 and/or first waveguide are free-standing. That is, they are spaced apart from the base surface and/or base substrate 148 in the vertical direction 150.

Furthermore, it is shown that the electrically conductive portion 106 comprises a layer of conductive material that is located on top of the free-standing support structure 120.

Fig. 1B shows a cross-section of a portion of the tunable nanobeam cavity resonator 100 along the cut B-B of Fig. 1. As can be seen, one end of the first waveguide 116 is mechanically connected and/or attached to the base surface and/or base substrate 148 by a support structure 123. Fig. 1B thus exemplarily shows the mechanical connection of one end of a waveguide to the base surface and/or base substrate 148. Thus, at the support structures 122, 124, 125, 126, 127 and 136, the tunable nanobeam cavity resonator 100 has corresponding cross-sections.

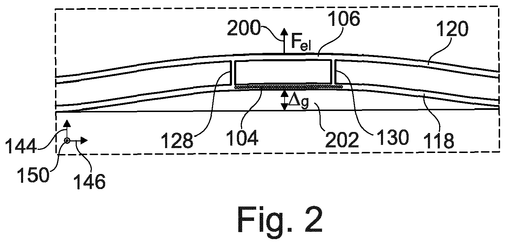

Fig. 2 shows a top view of a portion of the tunable nanobeam cavity resonator 100 of Fig. 1 when a voltage is applied between the electrode and the electrically conductive portion 106.

When such a voltage is applied, an electromechanical force 200 is exerted onto the electrically conductive portion 106 and/or the free-standing support structure 120.

Since the electrically conductive portion 106 and/or the free-standing support structure 120 is mechanically connected to the second optical cavity 104 and/or the second waveguide 118, the second optical cavity 104 and/or the second waveguide 118 moves in the lateral direction 144, such that the gap between the first and second optical cavities is changed by an amount 202.

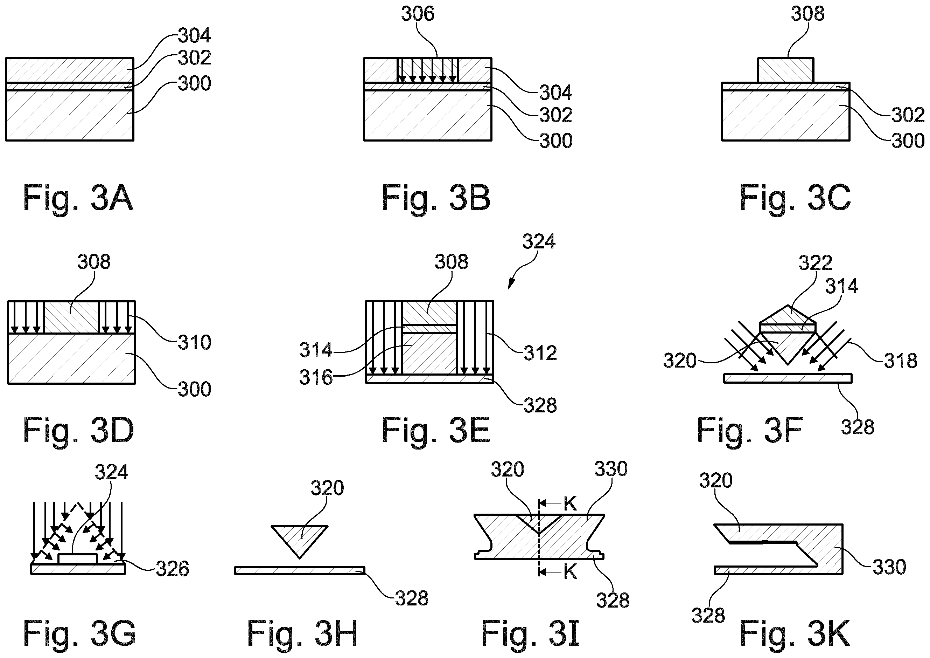

Figs. 3A to 3K show a method of manufacturing a free-standing structure from a bulk substrate 300, which may be employed to manufacture the free-standing waveguides of the tunable nanobeam cavity disclosed herein.

Fig. 3A shows a first step, in which a bulk substrate 300. The bulk substrate 300 is chosen to be a high refractive index material in order to enable optical confinement. The bulk substrate 300 is coated with a hard mask 302. The hard mask 302 is, e.g., deposited using physical vapor deposition, sputtering, or atomic layer deposition. Furthermore, an electron beam negative resist 304 is spin-coated on the hard mask 302.

Fig. 3B shows a patterning step, in which the pattern 306 is applied onto the electron beam negative resist 304 with an electron beam.

Fig. 3C shows the subsequent development step, in which unexposed resist is removed, e.g., with a chemical or by dry-etching. After this step only the patterned portions 308 of the resist remain.

Fig. 3D shows a subsequent step, in which the pattern is transferred onto the hard mask, e.g., using dry etching, which is illustrated with the arrows 310. For example, dry etching is used for high anisotropy.

Fig. 3E shows a subsequent step, in which the pattern is partly transferred to the bulk substrate, wherein a base portion 328 of the bulk substrate remains. For example, dry etching 312 is used for high anisotropy. After this step, patterned portions 314 and 316 are formed in the hard mask 302 and the bulk substrate 300.

Fig. 3F shows a subsequent step of angular etching 318 to create the free-standing structure of the substrate 320. Furthermore, portions of the hard mask 314 and the resist 322 may remain. For the angular etching, the device 324 obtained after the step of Fig. 3E may be placed into a Faraday cage 226 as shown in Fig. 3G. The Faraday cage can, e.g., be a cone or a prism. The Faraday cage redirects the ions orthogonal to the cage surface, to etch underneath the free-standing structures 320.

In a final step, the remaining mask and resist are removed. The result is shown in Fig. 3H, which comprises a free-standing structure 320, portions of which are not mechanically connected to the base surface 328.

Fig. 3I shows a cross-section through a support structure 330 that mechanically connects the free-standing structure 320 to the base surface 328. The width of the support structure 330 is chosen in a manner, which guarantees, that it will still be connected to the base surface 328 after the angular etching.

Fig. 3K shows a view along the cut K-K in Fig. 3I

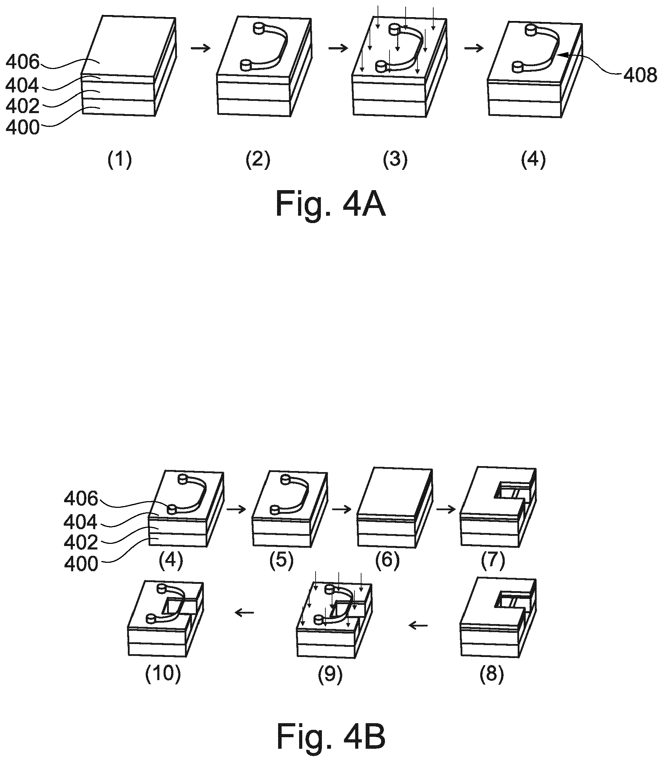

Figs. 4A and 4B show another method for the fabrication of rectangular free-standing structures, which may be employed to manufacture free-standing structures as disclosed herein.

In step (1) of Fig. 4A, a substrate comprising a substrate/base layer 400, a buffer layer 402 and a photonic layer 404 is spin coated with a negative tone resist on the photonic layer 404. In step (2), the negative tone resist 406 is patterned by exposing portions of the negative tone resist 406 to an electron beam. In step (3), the pattern is transferred to the photonic layer 404, e.g., via reactive ion etching, thereby partly removing the photonic layer resulting in a photonic integrated circuit 408.

Portions of the photonic integrated circuit 408 may be processed to be free-standing as shown in Fig. 4B. In step (5), a hard mask (e.g, a Cr layer) is deposited. In step (6), a positive tone resist (e.g., a Polymethylmethacrylat (PMMA) layer) is deposited, e.g., by spin coating. In step (7), the free-standing structure is patterned, e.g., with an electron beam. In step (8), the pattern is transferred to the hard mask via etching. In step (9), the remaining photonic layer is removed in the patterned portion (e.g., the Cr acts as a hard mask). In step (10), the hard mask and negative tone resist are removed. Furthermore, the buffer layer within an opening window is removed, e.g., via wet etching.

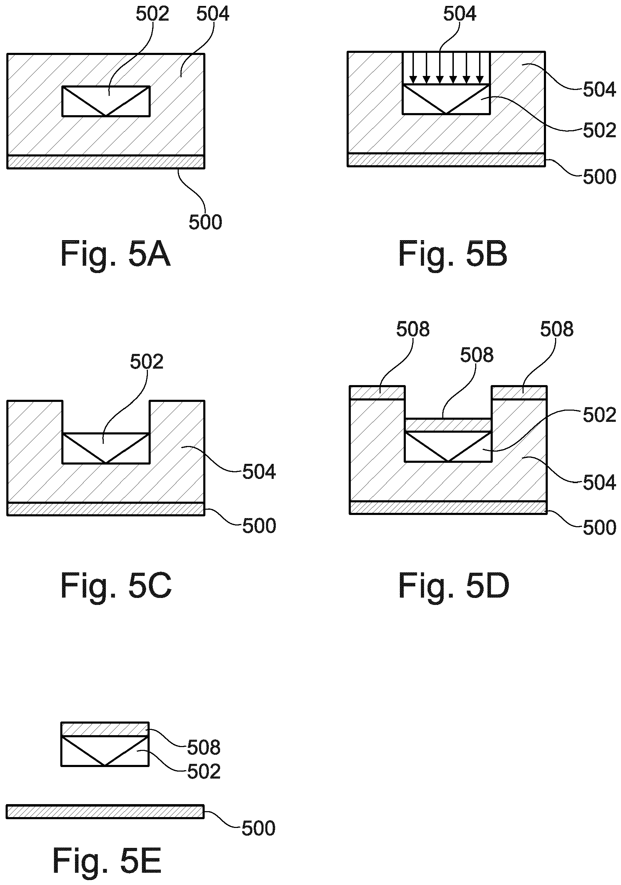

Figs. 5A to 5E show a method of depositing an electrically conductive layer, which may be employed to manufacture the electrically conductive portion and/or the electrode as disclosed herein.

Fig. 5A shows a substrate 500 comprising a free-standing support structure and/or waveguide 502. A positive tone electron beam resist 504 is spin coated onto the substrate 500. The portions to be coated with an electrically conductive material are then patterned by exposure to an electron beam 506 as shown in Fig. 5B. Subsequently, the patterned portions are removed in a development step, e.g., chemically or by dry-etching, as shown in Fig. 5C. Subsequently, a layer 508 of electrically conductive material is deposited as shown in Fig. 5D. Finally, the resist is removed, e.g., by placing the substrate in a lift-off chemical. The final product is shown in Fig. 5E.

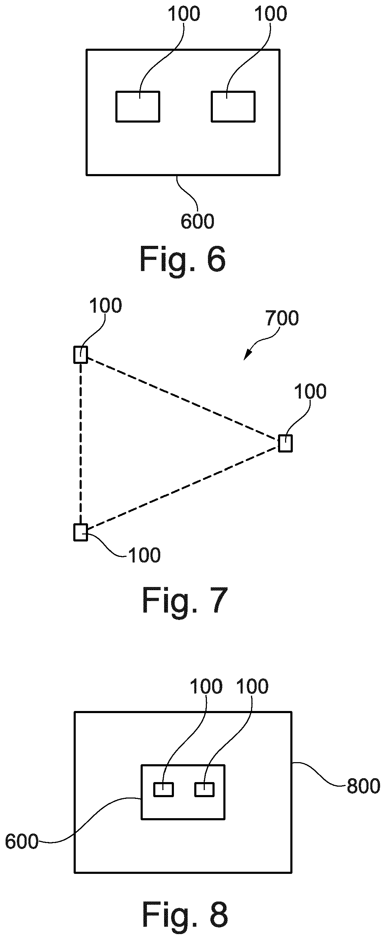

Fig. 6 shows a quantum register 600 comprising a plurality of tunable nanobeam cavity resonators 100.

Fig. 7 shows a quantum network 700, wherein each node of the quantum network comprises a tunable nanobeam cavity resonators 100.

Fig. 8 shows a quantum computer 800 comprising a quantum register 600 comprising a plurality of tunable nanobeam cavity resonators 100.

Further embodiments of the invention are disclosed in the following aspects:
1. A tunable nanobeam cavity resonator (100) comprising:
   a first optical cavity (102);
   a second optical cavity (104) optically coupled to the first optical cavity (102);
   an electrically conductive portion (106); and
   an electrode (108);
   wherein the first optical cavity (102) and/or the second optical cavity (104), preferably the first optical cavity (102), are/is adapted for hosting a qubit;
   wherein the first optical cavity (102) and the second optical cavity (104) are provided in the tunable nanobeam cavity resonator (100) such that there is a gap (110) between the first optical cavity (102) and the second optical cavity (104);
   wherein the electrically conductive portion (106) is configured to move with respect to the electrode (108) and the first optical cavity (102) when a voltage between the electrically conductive portion (106) and the electrode (108) is applied; and
   wherein the electrically conductive portion (106) is mechanically connected to the second optical cavity (104) such that movement of the electrically conductive portion (106) causes movement of the second optical cavity (104) with respect to the first optical cavity (102) to adjust the gap (110) between the first optical cavity (102) and the second optical cavity (104).
2. The tunable nanobeam cavity resonator (100) of aspect 1, wherein the adjustment of the gap (110) is suited to adjust a resonance frequency of the first optical cavity (102) and/or the second optical cavity (104).
3. The tunable nanobeam cavity resonator (100) of any one of the preceding aspects,
   wherein the first optical cavity (102) and the second optical cavity (104) are arranged parallel to each other.
4. The tunable nanobeam cavity resonator (100) of any one of the preceding aspects,
   wherein the first optical cavity (102) and the second optical cavity (104) each comprises a plurality of apertures forming at least one Bragg mirror.
5. The tunable nanobeam cavity resonator (100) of any one of the preceding aspects,
   wherein the first optical cavity (102) is a one-dimensional optical cavity; and/or
   wherein the second optical cavity (104) is a one-dimensional optical cavity.
6. The tunable nanobeam cavity resonator (100) of any one of the preceding aspects,
   wherein the first optical cavity (102) is incorporated into a first free-standing wave guide (116); and/or
   wherein the second optical cavity (104) is incorporated into a second free-standing wave guide (118).
7. The tunable nanobeam cavity resonator (100) of aspect 6, further comprising
   a free-standing support structure (120) for the electrically conductive portion (106), the electrically conductive portion (106) being provided on the free-standing support structure (120);
   wherein the free-standing support structure (120) is connected to the second wave guide (118) by at least one connector arm (128, 130);
   wherein, preferably, the free-standing support structure (120) and the first wave guide (116) are located on different sides of the second wave guide (118);
   wherein, preferably, the electrically conductive portion (106) comprises, preferably is formed by, a film of electrically conductive material provided on the free-standing support structure (120).
8. The tunable nanobeam cavity resonator (100) of aspect 7,
   wherein the free-standing support structure (120) is connected to the second wave guide (118) by at least two connector arms (128, 130);
   wherein at least one of the connector arms (128, 130) is connected to the second wave guide (118) proximate to a first end of the second optical cavity (104);
   wherein at least one of the connector arms (128, 130) is connected to the second wave guide (118) proximate to a second end of the second optical cavity (104), the first end and the second end being opposite ends of the optical cavity (104).
9. The tunable nanobeam cavity resonator (100) of any one of the preceding aspects, further comprising:
   an incoupling wave guide (132) configured to couple light into the first cavity.
10. The tunable nanobeam cavity resonator (100) of aspect 9,
   wherein the incoupling wave guide (132) comprises a tapered end (134) configured to couple with a tapered fiber.
11. The tunable nanobeam cavity resonator (100) of aspect 9 or 10,
   wherein the incoupling wave guide (132) comprises a plurality of apertures (138) forming a Bragg mirror; and
   wherein, preferably, the apertures in the incoupling wave guide are arranged such that a mirror plane (140) of the Bragg mirror formed by the apertures (138) of the incoupling wave guide (132) is located at the same longitudinal position as the center of the first optical cavity (102) and/or the second optical cavity (104).
12. The tunable nanobeam cavity resonator (100) of any one of the preceding aspects,
   wherein the first optical cavity (102) and/or first waveguide (116) and the second optical cavity (104) and/or second waveguide (118) are formed by etching structures from a substrate (300);
   wherein both ends of the first optical cavity (102) and/or the first waveguide (116) are attached to a respective support structure (122, 123) of the first optical cavity (102); and
   wherein both ends of the second optical cavity (104) and/or the second waveguide (118) are attached to a respective support structure (124, 125) of the second optical cavity (104).
13. The tunable nanobeam cavity resonator (100) of aspect 11 when dependent on aspect 7,
   wherein the electrically conductive portion and/or the free-standing support structure (120) is formed by etching a structure from a substrate (300, 404);
   wherein both ends of the electrically conductive portion and/or the free-standing support structure (120) are attached to a respective support structure (126, 127) of the free-standing support structure (120).
14. The tunable nanobeam cavity resonator (100) of aspect 12 when dependent on aspect 7 or 8,
   wherein the at least one/two connector arm/arms (128, 130) is/are formed by etching a structure/structures from a substrate (300, 404).
15. The tunable nanobeam cavity resonator (100) of any one of aspects 12 to 14, further comprising
   a base substrate (148);
   wherein the support structures (122, 123) of the first optical cavity (102) and the support structures (124, 125) of the second optical cavity (104) are provided on the base substrate (148);
   wherein the first optical cavity (102) and the second optical cavity (104) are spaced apart from the base substrate (148).
16. The tunable nanobeam cavity resonator (100) of any one of aspects 12 to 14, further comprising a base substrate (148, 400) and a layer (404) on the base substrate (148, 400),
   wherein the first optical cavity (102), the second optical cavity (104) are provided in the layer (404) provided on the base substrate (148, 400), preferably by etching.
17. The tunable nanobeam cavity resonator (100) of any one of the preceding aspects, wherein the gap (110) has a width between 5 nm and 5 µm, preferably between 10 nm and 1 µm, more preferably between 20 nm and 500 nm.
18. The tunable nanobeam cavity resonator (100) of any one of the preceding aspects, wherein the first optical cavity (102) and/or the second optical cavity (104) comprises, preferably is formed of, diamond, Si3N4, SOI, and/or LiNbO3
19. The tunable nanobeam cavity resonator (100) of any one of the preceding aspects,
   wherein the first optical cavity (102) and/or the second optical cavity (104) has a length between 5 µm and 1 mm, preferably between 20 µm and 500 µm, more preferably between 50 µm and 100 µm.
20. The tunable nanobeam cavity resonator (100) of any one of the preceding aspects,
   wherein the first wave guide (116) and/or the second wave guide (118) has a length between 5 µm and 1 mm, preferably between 20 µm and 500 µm, more preferably between 50 µm and 100 µm.
21. The tunable nanobeam cavity resonator (100) of any one of the preceding aspects,
   wherein the first optical cavity (102) and/or the second optical cavity (104) has a thickness 10 nm and 2 µm, preferably between 50 nm and 1 µm, more preferably between 100 nm and 800 nm.
22. The tunable nanobeam cavity resonator (100) of any one of the preceding aspects,
   wherein the first optical cavity (102) and/or the second optical cavity (104) has a triangular, rectangular, rhomboid or trapezoidal cross-sectional shape.
23. The tunable nanobeam cavity resonator (100) of any one of the preceding aspects,
   wherein each of the at least one connector arms (128, 130) has a length between 10 nm and 100 µm, preferably between 50 nm and 10 µm, more preferably between 100 nm and 5 µm.
24. The tunable nanobeam cavity resonator (100) of any one of the preceding aspects, further comprising:
   Means (142) to apply the voltage between the electrically conductive portion (106) and the electrode (108).
25. A quantum register (600) comprising at least two tunable nanobeam cavity resonators (100), each one of the at least two tunable nanobeam cavity resonators (100) being according to any one of aspects 1 to 23.
26. A quantum network (700) comprising a plurality of nodes, wherein each of the plurality of nodes comprises at least one tunable nanobeam cavity resonator (100) according to any one of aspects 1 to 24 or a quantum register according to aspect 25.
27. A quantum computer (800) comprising a tunable nanobeam cavity resonator (100) according to any one of aspects 1 to 24 or a quantum register (600) according to aspect 25.
28. Use of a tunable nanobeam cavity resonator (100) according to any one of aspects 1 to 24 in a quantum register (600) according to aspect 25, a quantum network (700) according to aspect 26, or a quantum computer (800) according to aspect 27.
29. Method of adjusting the resonance frequency of a first optical cavity (102) and/or a second optical cavity (104) of a tunable nanobeam cavity according to any one of aspects 1 to 24, the method comprising the step:
   applying a voltage between the electrically conductive portion (106) and the electrode (108).
30. Method of manufacturing a tunable nanobeam cavity, preferably, a tunable nanobeam cavity (100) according to any one of aspects 1 to 25, the method comprising the steps:
   providing a first optical cavity (102);
   providing a second optical cavity (104) optically coupled to the first optical cavity (102) such that there is a gap (110) between the first optical cavity (102) and the second optical cavity (104);
   providing an electrically conductive portion (106);
   providing an electrode (108);
   wherein the first optical cavity (102) and/or the second optical cavity (104) are/is adapted for hosting a qubit;
   wherein the electrically conductive portion (106) is provided such that it is configured to move with respect to the electrode (108) and the first optical cavity (102) when a voltage between the electrically conductive portion (106) and the electrode (108) is applied; and
   wherein the electrically conductive portion (106) is mechanically connected to the second optical cavity (108) such that movement of the electrically conductive portion (106) causes movement of the second optical cavity (104) with respect to the first optical cavity (102) to adjust the gap (110) between the first optical cavity (102) and the second optical cavity (104).
29. Method according to aspect 28, further comprising:
   providing a bulk substrate (300),
   wherein providing the first optical cavity comprises etching a first free-standing structure from the bulk substrate, wherein both ends of the first free-standing structure are attached to a support structure;
   wherein providing the second optical cavity comprises etching a second free-standing structure from the bulk substrate, wherein both ends of the second free-standing structure are attached to the support structure; and
   wherein providing the electrically conductive portion comprises etching a third free-standing structure from the bulk substrate, wherein both ends of the third free-standing structure are attached to the support structure.
30. Method according to aspect 28, further comprising:
   providing a base substrate (400);
   providing a layer on the base substrate (404);
   wherein providing the first optical cavity comprises etching a first free-standing structure from the layer, wherein both ends of the first free-standing structure are attached to a support structure;
   wherein providing the second optical cavity comprises etching a second free-standing structure from the layer, wherein both ends of the second free-standing structure are attached to the support structure; and
   wherein providing the electrically conductive portion comprises etching a third free-standing structure from the layer, wherein both ends of the third free-standing structure are attached to the support structure.
31. Method according to aspect 29 or 30,
   wherein providing the electrically conductive portion comprises providing an electrically conductive layer (506) on the third free-standing structure.
32. Method according to aspect 29, 30 or 31,
   wherein providing the electrode comprises providing an electrically conductive layer (506) on a portion of the substrate.
33. Method according to any one of aspects 29 to 32,
   wherein the second free-standing structure and the third free-standing structure are etched from the substrate such that the second free-standing structure and the third free-standing structure are mechanically connected by at least two connector arms.

## Claims

1. A tunable nanobeam cavity resonator (100) comprising:
a first optical cavity (102);
a second optical cavity (104) optically coupled to the first optical cavity (102);
an electrically conductive portion (106); and
an electrode (108);
wherein the first optical cavity (102) and/or the second optical cavity (104), preferably the first optical cavity (102), are/is adapted for hosting a qubit;
wherein the first optical cavity (102) and the second optical cavity (104) are provided in the tunable nanobeam cavity resonator (100) such that there is a gap (110) between the first optical cavity (102) and the second optical cavity (104);
wherein the electrically conductive portion (106) is configured to move with respect to the electrode (108) and the first optical cavity (102) when a voltage between the electrically conductive portion (106) and the electrode (108) is applied; and
wherein the electrically conductive portion (106) is mechanically connected to the second optical cavity (104) such that movement of the electrically conductive portion (106) causes movement of the second optical cavity (104) with respect to the first optical cavity (102) to adjust the gap (110) between the first optical cavity (102) and the second optical cavity (104);
wherein, preferably, the adjustment of the gap (110) is suited to adjust a resonance frequency of the first optical cavity (102) and/or the second optical cavity (104).

2. The tunable nanobeam cavity resonator (100) of claim 1,
wherein the first optical cavity (102) and the second optical cavity (104) each comprises a plurality of apertures forming at least one Bragg mirror; and/or
wherein the first optical cavity (102) is a one-dimensional optical cavity; and/or wherein the second optical cavity (104) is a one-dimensional optical cavity.

3. The tunable nanobeam cavity resonator (100) of claim 1 or 2,
wherein the first optical cavity (102) is incorporated into a first free-standing wave guide (116); and/or
wherein the second optical cavity (104) is incorporated into a second free-standing wave guide (118).

4. The tunable nanobeam cavity resonator (100) of claim 4, further comprising
a free-standing support structure (120) for the electrically conductive portion (106), the electrically conductive portion (106) being provided on the free-standing support structure (120);
wherein the free-standing support structure (120) is connected to the second wave guide (118) by at least one connector arm (128, 130);
wherein, preferably, the free-standing support structure (120) and the first wave guide (116) are located on different sides of the second wave guide (118);
wherein, preferably, the electrically conductive portion (106) comprises, preferably is formed by, a film of electrically conductive material provided on the free-standing support structure (120).

5. The tunable nanobeam cavity resonator (100) of claim 4,
wherein the free-standing support structure (120) is connected to the second wave guide (118) by at least two connector arms (128, 130);
wherein at least one of the connector arms (128, 130) is connected to the second wave guide (118) proximate to a first end of the second optical cavity (104);
wherein at least one of the connector arms (128, 130) is connected to the second wave guide (118) proximate to a second end of the second optical cavity (104), the first end and the second end being opposite ends of the optical cavity (104).

6. The tunable nanobeam cavity resonator (100) of any one of the preceding claims, further comprising:
an incoupling wave guide (132) configured to couple light into the first cavity;
wherein, preferably, the incoupling wave guide (132) comprises a tapered end (134) configured to couple with a tapered fiber;
wherein, preferably, the incoupling wave guide (132) comprises a plurality of apertures (138) forming a Bragg mirror; and
wherein, preferably, the apertures in the incoupling wave guide are arranged such that a mirror plane (140) of the Bragg mirror formed by the apertures (138) of the incoupling wave guide (132) is located at the same longitudinal position as the center of the first optical cavity (102) and/or the second optical cavity (104).

7. The tunable nanobeam cavity resonator (100) of any one of the preceding claims, wherein the gap (110) has a width between 5 nm and 5 µm, preferably between 10 nm and 1 µm, more preferably between 20 nm and 500 nm; and/or
wherein each of the at least one connector arms (128, 130) has a length between 10 nm and 100 µm, preferably between 50 nm and 10 µm, more preferably between 100 nm and 5 µm.

8. The tunable nanobeam cavity resonator (100) of any one of the preceding claims, further comprising:
means (142) to apply the voltage between the electrically conductive portion (106) and the electrode (108).

9. A quantum register (600) comprising at least two tunable nanobeam cavity resonators (100), each one of the at least two tunable nanobeam cavity resonators (100) being according to any one of the preceding claims.

10. A quantum network (700) comprising a plurality of nodes, wherein each of the plurality of nodes comprises at least one tunable nanobeam cavity resonator (100) according to any one of claims 1 to 8 or a quantum register (600) according to claim 9.

11. A quantum computer (800) comprising a tunable nanobeam cavity resonator (100) according to any one of claims 1 to 8 or a quantum register (600) according to claim 10.

12. Method of adjusting the resonance frequency of a first optical cavity (102) and/or a second optical cavity (104) of a tunable nanobeam cavity, the tunable nanobeam cavity preferably being according to any one of claims 1 to 8, the method comprising the step:
applying a voltage between an electrically conductive portion (106) and an electrode (108).

13. Method of manufacturing a tunable nanobeam cavity, preferably, a tunable nanobeam cavity (100) according to any one of claims 1 to 8, the method comprising the steps:
providing a first optical cavity (102);
providing a second optical cavity (104) optically coupled to the first optical cavity (102) such that there is a gap (110) between the first optical cavity (102) and the second optical cavity (104);
providing an electrically conductive portion (106);
providing an electrode (108);
wherein the first optical cavity (102) and/or the second optical cavity (104) are/is adapted for hosting a qubit;
wherein the electrically conductive portion (106) is provided such that it is configured to move with respect to the electrode (108) and the first optical cavity (102) when a voltage between the electrically conductive portion (106) and the electrode (108) is applied; and
wherein the electrically conductive portion (106) is mechanically connected to the second optical cavity (108) such that movement of the electrically conductive portion (106) causes movement of the second optical cavity (104) with respect to the first optical cavity (102) to adjust the gap (110) between the first optical cavity (102) and the second optical cavity (104).

14. Method according to claim 13, further comprising:
providing a bulk substrate (300),
wherein providing the first optical cavity comprises etching a first free-standing structure from the bulk substrate, wherein both ends of the first free-standing structure are attached to a support structure;
wherein providing the second optical cavity comprises etching a second free-standing structure from the bulk substrate, wherein both ends of the second free-standing structure are attached to the support structure; and
wherein providing the electrically conductive portion comprises etching a third free-standing structure from the bulk substrate, wherein both ends of the third free-standing structure are attached to the support structure.

15. Method according to claim 13, further comprising:
providing a base substrate (400);
providing a layer on the base substrate (404);
wherein providing the first optical cavity comprises etching a first free-standing structure from the layer, wherein both ends of the first free-standing structure are attached to a support structure;
wherein providing the second optical cavity comprises etching a second free-standing structure from the layer, wherein both ends of the second free-standing structure are attached to the support structure; and
wherein providing the electrically conductive portion comprises etching a third free-standing structure from the layer, wherein both ends of the third free-standing structure are attached to the support structure.
